# EUROPEAN PATENT APPLICATION

(11) **EP 4 576 898 A1**
(43) Date of publication of application: **25.06.2025**
(21) Application number: 23854471.2
(22) Date of filing: 16.08.2023
(51) Int. Cl.: H04W 72/04

(54) **RESOURCE ALLOCATION METHOD AND APPARATUS, AND STORAGE MEDIUM**

(30) Priority: 17.08.2022 CN 202210989350
(71) Applicant: Spreadtrum Semiconductor (Nanjing) Co., Ltd., Nanjing, Jiangsu 210000 (CN)
(72) Inventor: LEI, Zhenzhu, Nanjing, Jiangsu 210000 (CN)
(74) Representative: Ipside
(86) International application number: PCT/CN2023/113399
(87) International publication number: WO 2024/037571

(57) **Abstract**

The present disclosure provides a resource allocation method and apparatus, and a storage medium. The method includes: a terminal device obtains a resource configuration parameter of a resource pool, determines at least one PSCCH frequency-domain resource range on a frequency domain of the resource pool based on the resource configuration parameter, and performs SCI blind detection in the at least one PSCCH frequency-domain resource range, to determine an available transmission resource of a PRS in the resource pool based on an SCI blind detection result. It is no longer necessary to allocate one slot to one terminal device for PRS transmission, which helps alleviate the problem of resource scarcity and improves the utilization rate of resources in the resource pool.

## Description

This application claims priority to Chinese Patent Application No. 202210989350.X, filed with the China National Intellectual Property Administration on August 17, 2022 and entitled "RESOURCE ALLOCATION METHOD AND APPARATUS, AND STORAGE MEDIUM", which is hereby incorporated by reference in its entirety.

### TECHNICAL FIELD

The present disclosure relates to the field of communication technologies and, in particular, to a resource allocation method and apparatus, and a storage medium.

### BACKGROUND

With the development of the 5th generation mobile communication technology (5th Generation, 5G), users have put forward higher requirements on a communication capability of a sidelink (Sidelink, SL) between terminal devices. For example, positioning measurements of the terminal devices are completed through the sidelink communication.

For the terminal devices, in order to complete the positioning measurements in the sidelink, it is necessary to transmit positioning measurement related signals in the sidelink. However, transmission resources in the sidelink are relatively tight, thereby making it difficult to configure dedicated positioning measurement resources for each terminal device. Therefore, how to achieve resource allocation for the positioning measurement related signals in the sidelink is of great practical significance for improving the communication capability of the sidelink.

### SUMMARY

The present disclosure provides a resource allocation method and apparatus, and a storage medium, which helps to alleviate the problem of resource scarcity in a resource pool of a Sidelink.

In a first aspect, the present disclosure provides a resource allocation method, including:
obtaining a resource configuration parameter of a resource pool;
determining at least one physical sidelink control channel PSCCH frequency-domain resource range on a frequency domain of the resource pool based on the resource configuration parameter;
performing sidelink control information SCI blind detection within the at least one PSCCH frequency-domain resource range, to determine an available transmission resource of a positioning reference signal PRS in the resource pool.

In a possible implementation, the resource configuration parameter includes one or more of the following parameters:
a configuration parameter of at least one sidelink positioning reference signal SL-PRS resource in each slot;
a quantity N of SL-PRS resources associated with each PSCCH frequency-domain resource range, where N is a positive integer.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining the at least one physical sidelink control channel PSCCH frequency-domain resource range on the frequency domain of the resource pool based on the resource configuration parameter of the resource pool includes:
dividing frequency-domain resources of the resource pool based on the N and a quantity of SL-PRS resources configured in each slot, to determine a resource size of the at least one PSCCH frequency-domain resource range.

In a possible implementation, the method further includes:
determining a PSCCH frequency-domain resource range associated with each SL-PRS resource on the frequency domain of the resource pool based on the resource size, the configuration parameter of the SL-PRS resource and a mapping manner between SL-PRS resources and PSCCH frequency-domain resource ranges.

In a possible implementation, the resource configuration parameter includes one or more of the following:
a configuration parameter of at least one SL-PRS resource in each slot;
a quantity P of PSCCH frequency-domain resource ranges, where P is an integer greater than or equal to 1;
a resource size of each PSCCH frequency-domain resource range;
a starting position of the first PSCCH frequency-domain resource range;
a frequency-domain interval between two adjacent PSCCH frequency-domain resource ranges.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining the at least one physical sidelink control channel PSCCH frequency-domain resource range on the frequency domain of the resource pool based on the resource configuration parameter of the resource pool includes:
determining a position of the at least one PSCCH frequency-domain resource range based on the resource size of each PSCCH frequency-domain resource range, the P, the starting position of the first PSCCH frequency-domain resource range and the frequency-domain interval between two adjacent PSCCH frequency-domain resource ranges.

In a possible implementation, the method further includes:
determining a quantity of SL-PRS resources corresponding to one PSCCH frequency-domain resource range based on a quantity of SL-PRS resources configured in each slot and the P.

In a possible implementation, the method further includes:
determining a PSCCH frequency-domain resource range associated with each SL-PRS resource on the frequency domain of the resource pool based on the position of the at least one PSCCH frequency-domain resource range, the configuration parameter of the SL-PRS resource, a mapping manner between SL-PRS resources and PSCCH frequency-domain resource ranges, and the quantity of the SL-PRS resources associated with one PSCCH frequency-domain resource range.

In a possible implementation, the mapping manner is to map the SL-PRS resources to the PSCCH frequency-domain resource ranges in sequence based on index numbers of the SL-PRS resources and a frequency-domain position of the at least one PSCCH frequency-domain resource range.

In a possible implementation, the resource configuration parameter includes one or more of the following parameters:
a starting position of the PSCCH frequency-domain resource range and a resource size of the PSCCH frequency-domain resource range.

In a possible implementation, the determining the at least one physical sidelink control channel PSCCH frequency-domain resource range on the frequency domain of the resource pool based on the resource configuration parameter of the resource pool includes:
determining the at least one PSCCH frequency-domain resource range on the frequency domain of the resource pool based on the starting position and the resource size.

In a possible implementation, the resource configuration parameter includes one or more of the following parameters:
a starting position of the resource pool and a resource size of the PSCCH frequency-domain resource range.

In a possible implementation, the determining the at least one physical sidelink control channel PSCCH frequency-domain resource range on the frequency domain of the resource pool based on the resource configuration parameter of the resource pool includes:
taking the starting position of the resource pool as a starting position of the PSCCH frequency-domain resource range;
determining at least one PSCCH frequency-domain resource range on the frequency domain of the resource pool based on the starting position and the resource size.

In a possible implementation, the starting position is a starting sub-channel or a starting resource block RB of the resource pool.

In a possible implementation, the performing the sidelink control information SCI blind detection within the at least one PSCCH frequency-domain resource range, to determine the available transmission resource of the positioning reference signal PRS in the resource pool, includes:
performing the SCI blind detection within the at least one PSCCH frequency-domain resource range, to obtain an SCI blind detection result;
determining whether a PRS resource associated with each PSCCH frequency-domain resource range in the at least one PSCCH frequency-domain resource range is available based on the SCI blind detection result, where the available transmission resource of the PRS is at least one of a plurality of SL-PRS resources in a slot where the transmission resource is located.

In a possible implementation, the performing the sidelink control information SCI blind detection within the at least one PSCCH frequency-domain resource range, to determine the available transmission resource of the positioning reference signal PRS in the resource pool, includes:
performing the SCI blind detection within the at least one PSCCH frequency-domain resource range, to obtain an SCI blind detection result;
determining the available transmission resource of the PRS based on the SCI blind detection result.

In a possible implementation, the resource pool is configured to transmit the PRS.

In a second aspect, the present disclosure provides a resource allocation apparatus, including:
an obtaining module, configured to obtain a resource configuration parameter of a resource pool;
a determining module, configured to determine at least one physical sidelink control channel PSCCH frequency-domain resource range on a frequency domain of the resource pool based on the resource configuration parameter;
a processing module, configured to perform sidelink control information SCI blind detection within the at least one PSCCH frequency-domain resource range, to determine an available transmission resource of a positioning reference signal PRS.

In a possible implementation, the resource configuration parameter includes one or more of the following parameters:
a configuration parameter of at least one sidelink positioning reference signal SL-PRS resource in each slot;
a quantity N of SL-PRS resources associated with each PSCCH frequency-domain resource range, where N is a positive integer.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining module is specifically configured to:
divide frequency-domain resources of the resource pool based on the N and a quantity of SL-PRS resources configured in each slot, to determine a resource size of the at least one PSCCH frequency-domain resource range.

In a possible implementation, the determining module is further configured to:
determine a PSCCH frequency-domain resource range associated with each SL-PRS resource on the frequency domain of the resource pool based on the resource size, the configuration parameter of the SL-PRS resource and a mapping manner between SL-PRS resources and PSCCH frequency-domain resource ranges.

In a possible implementation, the resource configuration parameter includes one or more of the following:
a configuration parameter of at least one SL-PRS resource in each slot;
a quantity P of PSCCH frequency-domain resource ranges, where P is an integer greater than or equal to 1;
a resource size of each PSCCH frequency-domain resource range;
a starting position of the first PSCCH frequency-domain resource range;
a frequency-domain interval between two adjacent PSCCH frequency-domain resource ranges.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining module is further configured to:
determine a position of the at least one PSCCH frequency-domain resource range based on the resource size of each PSCCH frequency-domain resource range, the P, the starting position of the first PSCCH frequency-domain resource range and the frequency-domain interval between two adjacent PSCCH frequency-domain resource ranges.

In a possible implementation, the determining module is further configured to:
determine a quantity of SL-PRS resources corresponding to one PSCCH frequency-domain resource range based on a quantity of SL-PRS resources configured in each slot and the P.

In a possible implementation, the determining module is further configured to:
determine a PSCCH frequency-domain resource range associated with each SL-PRS resource on the frequency domain of the resource pool based on the position of the at least one PSCCH frequency-domain resource range, the configuration parameter of the SL-PRS resource, a mapping manner between SL-PRS resources and PSCCH frequency-domain resource ranges, and the quantity of the SL-PRS resources associated with one PSCCH frequency-domain resource range.

In a possible implementation, the mapping manner is to map the SL-PRS resources to the PSCCH frequency-domain resource ranges in sequence based on index numbers of the SL-PRS resources and a frequency-domain position of the at least one PSCCH frequency-domain resource range.

In a possible implementation, the resource configuration parameter includes one or more of the following parameters:
a starting position of the PSCCH frequency-domain resource range and a resource size of the PSCCH frequency-domain resource range.

In a possible implementation, the determining module is further configured to:
determine the at least one PSCCH frequency-domain resource range on the frequency domain of the resource pool based on the starting position and the resource size.

In a possible implementation, the resource configuration parameter includes one or more of the following parameters:
a starting position of the resource pool and a resource size of the PSCCH frequency-domain resource range.

In a possible implementation, the determining module is further configured to:
take the starting position of the resource pool as a starting position of the PSCCH frequency-domain resource range;
determine at least one PSCCH frequency-domain resource range on the frequency domain of the resource pool based on the starting position and the resource size.

In a possible implementation, the starting position is a starting sub-channel or a starting resource block RB of the resource pool.

In a possible implementation, the processing module is specifically configured to:
perform the SCI blind detection within the at least one PSCCH frequency-domain resource range, to obtain an SCI blind detection result;
determine whether a PRS resource associated with each PSCCH frequency-domain resource range in the at least one PSCCH frequency-domain resource range is available based on the SCI blind detection result, where the available transmission resource of the PRS is at least one of a plurality of SL-PRS resources in a slot where the transmission resource is located.

In a possible implementation, the processing module is further configured to:
perform the SCI blind detection within the at least one PSCCH frequency-domain resource range, to obtain an SCI blind detection result;
determine the available transmission resource of the PRS based on the SCI blind detection result.

In a possible implementation, the resource pool is configured to transmit the PRS.

In a third aspect, the present disclosure provides a resource allocation apparatus, including: a processor, and a memory communicatively connected with the processor; where:
the memory stores computer-execution instructions;
the processor executes the computer-execution instructions stored in the memory, to implement the method provided in the first aspect.

In a fourth aspect, the present disclosure provides a computer-readable storage medium, where the computer-readable storage medium stores computer-execution instructions which, when executed by a processor, are used to implement the resource allocation method provided in the first aspect.

In a fifth aspect, the present disclosure provides a computer program product including a computer program, and when the computer program is executed by a processor, i the resource allocation method provided in the first aspect is implemented.

In a sixth aspect, the present disclosure provides a chip, where the chip stores a computer program, and when the computer program is executed by the chip, the method provided in the first aspect is implemented. The chip may also be a chip module.

Using the resource allocation method and apparatus, and the storage medium provided in the present disclosure, a terminal device obtains a resource configuration parameter of a resource pool, determines at least one PSCCH frequency-domain resource range on a frequency domain of the resource pool based on the resource configuration parameter, and performs SCI blind detection within the at least one PSCCH frequency-domain resource range, so as to determine an available transmission resource of a PRS in the resource pool based on an SCI blind detection result. It is no longer necessary to allocate one slot to one terminal device for PRS transmission, which helps alleviate the problem of resource scarcity and improves the utilization rate of resources in the resource pool.

### BRIEF DESCRIPTION OF THE DRAWINGS

The accompanying drawings, which are incorporated herein and constitute part of the description, illustrate embodiments consistent with the present disclosure and are used to explain the principles of the present disclosure together with the description.
FIG. 1 is a schematic diagram of a Sidelink transmission resource in a resource pool.
FIG. 2 is a schematic diagram of a terminal device determining an available resource within a resource selection window.
FIG. 3 is a schematic diagram of two retransmission resources that may be indicated in SCI of a single transmission.
FIG. 4A is a schematic diagram of a Sidelink communication scenario.
FIG. 4B is a schematic diagram of another Sidelink communication scenario.
FIG. 4C is a schematic diagram of still another Sidelink communication scenario.
FIG. 5 is a schematic flowchart of a resource allocation method according to Embodiment 1 of the present disclosure.
FIG. 6 is a schematic diagram of SL-PRS resources and PSCCH frequency-domain resource ranges in a resource pool as exemplified in Embodiment 2 of the present disclosure.
FIG. 7 is a schematic diagram of SL-PRS resources and PSCCH frequency-domain resource ranges in a resource pool as exemplified in Embodiment 3 of the present disclosure.
FIG. 8 is a schematic diagram of SL-PRS resources and PSCCH frequency-domain resource ranges in a resource pool as exemplified in Embodiment 3 of the present disclosure.
FIG. 9 is a schematic diagram of SL-PRS resources and PSCCH frequency-domain resource ranges in a resource pool as exemplified in Embodiment 3 of the present disclosure.
FIG. 10 is a schematic diagram of one PSCCH frequency-domain resource range as exemplified in Embodiment 4 of the present disclosure.
FIG. 11 is a schematic diagram of one PSCCH frequency-domain resource range as exemplified in Embodiment 5 of the present disclosure.
FIG. 12 is a schematic structural diagram of a resource allocation apparatus according to Embodiment 6 of the present disclosure.
FIG. 13 is a schematic structural diagram of a resource allocation apparatus according to Embodiment 7 of the present disclosure.

Through the above-mentioned accompanying drawings, the definite embodiments of the present disclosure have been illustrated, and will be described in more detail in the following text. The accompanying drawings and the text description are not intended to limit the scope of the concept of the present disclosure in any way, but rather to illustrate the concept of the present disclosure to those skilled in the art by referring to specific embodiments.

### DESCRIPTION OF EMBODIMENTS

The exemplary embodiments will be explained in detail herein, and the examples thereof are illustrated in the accompanying drawings. When referring to the accompanying drawings in the following description, unless otherwise indicated, the same numbers in different drawings represent the same or similar elements. The implementations described in the following exemplary embodiments do not represent all implementations consistent with the present disclosure. On the contrary, they are merely examples of apparatuses and methods that are consistent with some aspects of the present disclosure as detailed in the appended claims.

The technical solutions of the embodiments of the present disclosure may be applicable to various communication systems, such as a long term evolution (Long Term Evolution, LTE) system, an LTE frequency division duplex (Frequency Division Duplex, FDD) system, an LTE time division duplex (Time Division Duplex, TDD), a universal mobile telecommunication system (Universal Mobile Telecommunication System, UMTS), a worldwide interoperability for microwave access (Worldwide Interoperability for Microwave Access, WiMAX) communication system, a 5G mobile communication system, or a new radio access technology (New Radio Access Technology, NR). The 5G mobile communication system may include non-standalone (Non-Standalone, NSA) and/or standalone (Standalone, SA).

The technical solutions provided in the present disclosure may also be applicable to machine type communication (Machine Type Communication, MTC), long term evolution-machine (Long Term Evolution-Machine, LTE-M), device-to-device (Device-to Device, D2D) networks, machine-to-machine (Machine to Machine, M2M) networks, internet of things (Internet of Things, IoT) networks, or other networks. The IoT network may, for example, include internet of vehicles. The communication modes in an internet of vehicles system are generally referred to as vehicle to other devices (Vehicle to X, V2X, where X may represent anything). For example, the V2X may include: vehicle to vehicle (Vehicle to Vehicle, V2V) communication, vehicle to infrastructure (Vehicle to Infrastructure, V2I) communication, vehicle to pedestrian (Vehicle to Pedestrian, V2P) communication, or vehicle to network (Vehicle to Network, V2N) communication, etc.

Firstly, the related terms or nouns involved in the present disclosure are introduced to facilitate understanding by those skilled in the art.

### (1) Sidelink

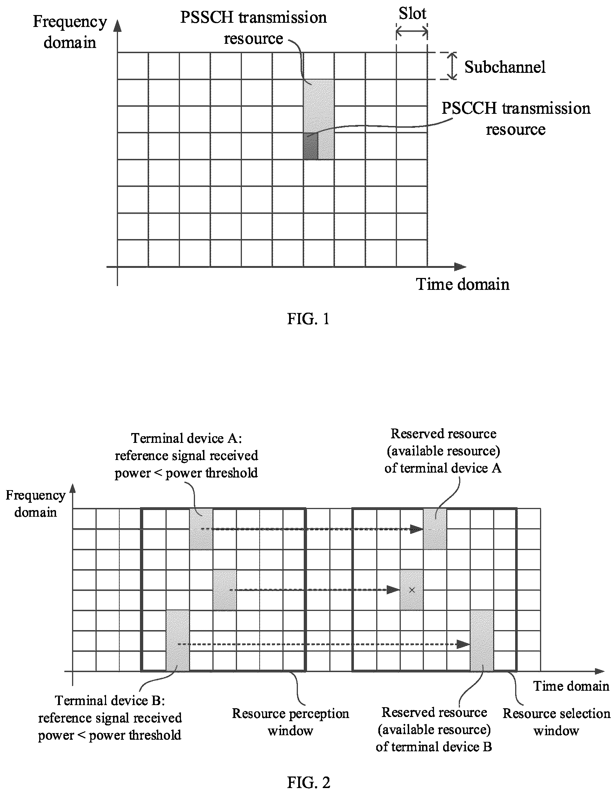

The Sidelink is used for direct communication between terminal devices, and specifically, the terminal devices can communicate with each other through a direct communication interface by using the Sidelink. In a resource pool, the smallest granularity on a time domain is a slot (Slot) and the smallest granularity on a frequency domain is a sub-channel (Sub-channel), where one sub-channel includes a plurality of resource blocks (Resource Blocks, RBs). When selecting a Sidelink transmission resource, the terminal device can determine the required quantity X of sub-channels based on a size of data packets that needs to be transmitted by the terminal device, thereby determining that the Sidelink transmission resource of the terminal device is X continuous sub-channels in a certain slot, where X is a positive integer. FIG. 1 is a schematic diagram in which the quantity of sub-channels is 3, and a physical sidelink control channel (Physical Sidelink Control CHannel, PSCCH) and a sidelink shared channel (Physical Sidelink Shared Channel, PSSCH) are simultaneously transmitted on the Sidelink transmission resource, where the PSCCH carries sidelink control information (Sidelink Control Information, SCI), and the PSSCH carries the transmitted data. The SCI includes time-frequency-domain position information of the current Sidelink transmission resource, time-frequency-domain position information of a reserved Sidelink transmission resource, and parameters for decoding the PSSCH, etc., where the reserved Sidelink transmission resource may be referred to as the reserved resource.

In NR V2X, two Sidelink resource allocation schemes of Mode 1 (Mode 1) and Mode 2 (Mode 2) are supported.

Mode 1: a base station schedules Sidelink transmission resources to terminal devices for Sidelink transmission.

Mode 2: the terminal devices determine the Sidelink transmission resources configured or preconfigured by the base station/network device, that is, the base station does not participate in resource allocation. The Sidelink transmission resource may be referred to as the transmission resource hereinafter.

The resource allocation under the Mode 2 may be divided into a resource perception stage and a resource selection/reselection stage, corresponding to a resource perception window and a resource selection window, respectively. The terminal device is always in a resource perception state. When the terminal device triggers resource selection, the terminal device determines a resource occupation situation within the resource selection window based on a perception result of the resource perception window, and excludes unavailable resources occupied by other devices within the resource selection window, so as to determine available transmission resources to perform Sidelink transmission. There may be various trigger conditions for the terminal device to trigger resource selection. For example, the trigger condition may be that the terminal device has no available transmission resource when a data packet arrives.

Specifically, in the resource perception window, when detecting a PSCCH, the terminal device decodes SCI carried in the PSCCH and performs determination through a received reference signal received power (Reference Signal Received Power, RSRP). As shown in FIG. 2, if values of RSRPs of a terminal device A and a terminal device B are less than or equal to a pre-set power threshold, reserved resources of the terminal device A and the terminal device B within the resource selection window are determined as available resources. The time-frequency-domain position information of the reserved resources of the terminal device A and the terminal device B may be obtained by decoding SCI.

### (2) SCI

The time-frequency-domain position information (i.e. time-domain position information and frequency-domain position information) of the reserved resources in the SCI indicates the transmission resources for retransmissions of a transport block (Transport Block, TB) when the terminal device transmits the same TB, so as to represent resource reservation. After other terminal devices perceive the current transmission resource of the terminal device, the occupation situation of the reserved resources within the resource selection window can be determined based on the SCI. The TB includes the PSCCH and the PSSCH.

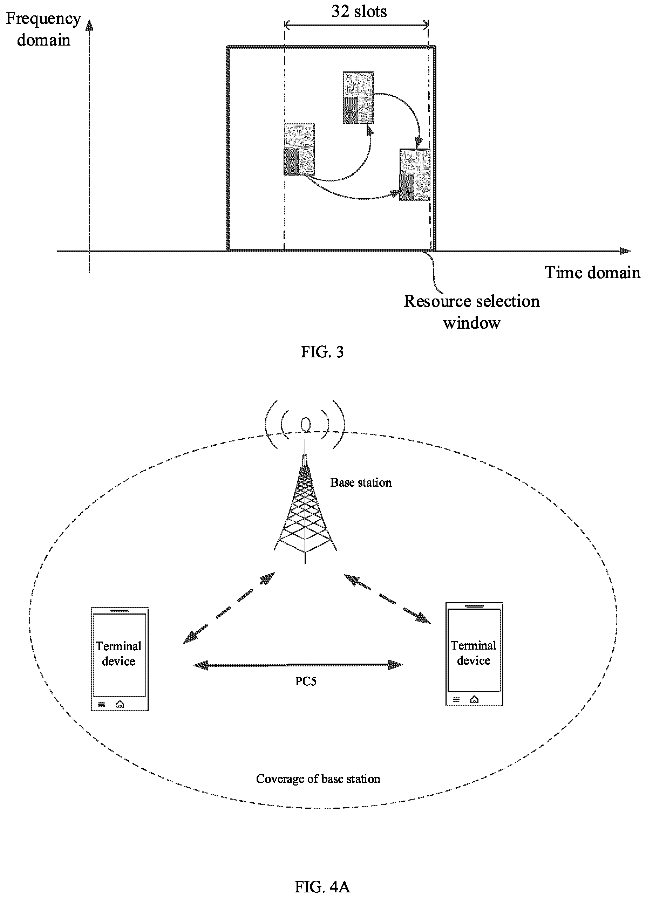

Each piece of SCI can indicate at most L transmission resources. For example, the value of L supported in the resource pool can be configured through high-layer signaling. The value is generally 2 or 3. That is to say, the SCI needs to indicate time-frequency-domain resource positions of the present transmission and at most two other retransmissions. In order to limit resource indication overhead in the SCI, a time interval between the first transmission resource and the last transmission resource indicated in each piece of SCI shall not exceed 32 slots. As shown in FIG. 3, when the value of L is 3, in the time domain, it indicates that the SCI in a transmission may indicate at most two subsequent retransmission resources. That is to say, the SCI of the first TB transmission indicates the time-frequency-domain resource positions of the present transmission and two subsequent TB retransmissions, and the SCI of the second TB transmission indicates the time-frequency-domain resource positions of the present transmission and the third transmission. It can be understood that the SCI in the third transmission no longer indicates subsequent transmission resources. Generally, the maximum number of transmissions (including the first transmission and retransmissions) of a TB may be 32. The time-domain position information and the frequency-domain position information in the SCI may be represented in a joint coding manner.

### (3) Positioning Reference Signal (Positioning Reference Signal, PRS)

In mobile communication systems, positioning the terminal devices is one of important functions. Current positioning technologies include downlink positioning technologies and uplink positioning technologies. A downlink reference signal may be a PRS. A terminal device may send a PRS through a Sidelink transmission resource, so that other terminal devices can measure the PRS, so as to obtain a relative position between the terminal devices.

It can be understood that, the PRS may be transmitted together with information such as the PSCCH and/or the PSSCH on the sidelink transmission resource, or the resource pool for transmitting the information such as the PSCCH and the PSSCH may be on different frequencies, different carriers, or different bandwidth parts (Bandwidth Parts, BWPs) from the resource pool for transmitting the PRS. Since a bandwidth of the PRS is relatively large, if the transmission resource of the PRS is determined based on the above-mentioned Sidelink resource allocation scheme, in the time domain, one slot can only be allocated to one terminal device for use, while the bandwidth of the entire resource pool may be occupied on the frequency domain, resulting in that the transmission resources of the PRSs are relatively insufficient. How to improve utilization efficiency of the transmission resources of the PRSs is a problem to be solved.

Specifically, a parameter structure of the PRS includes a four-layer structure, that is, a positioning frequency layer includes a plurality of transmission and reception points (Transmission and Reception Points, TPRs), where one TPR may correspond to a plurality of PRS resource sets (Sets), and one PRS resource set may include a plurality of PRS resources. Each PRS resource has a corresponding identity document (Identity Document, ID).

Correspondingly, the parameter and the influence range corresponding to each layer are different. For example, parameters of the positioning frequency layer include a frequency-domain resource reference position of the PRS, a sub-carrier interval of the PRS, a cyclic prefix (Cyclic Prefix, CP) type of the PRS, a resource pattern of the PRS, a starting resource block (Resource Block, RB) of the PRS, and a bandwidth of the PRS. The influence range of the positioning frequency layer is all PRS resources contained within the layer.

Parameters of a PRS resource set layer include a period of the PRS resource, a starting slot of the PRS resource set, a repetition factor of the PRS resource, a time interval between the PRS resources, and a muting pattern of the PRS transmission. The influence range of the PRS resource set layer is all PRS resources within the resource set.

Parameters of a PRS resource layer include a starting RE position of the first symbol occupied by the PRS, an RE position interval relative to the first symbol, an interval of the PRS relative to the first slot of the PRS resource set (the unit of the interval is a slot), a position of the PRS starting symbol (Symbol), and the quantity of symbols occupied. The influence range of the PRS resource layer is all PRS resources within the layer.

In view of this, the present disclosure provides a resource allocation method, where a terminal device determines at least one PSSCH frequency-domain resource range based on a resource configuration parameter of a resource pool, and performs SCI blind detection within the at least one PSCCH frequency-domain resource range to determine an available transmission resource of a PRS among multiple SL-PRS resources. It is no longer necessary to allocate one slot to one terminal device for PRS transmission, which helps alleviate the problem of resource scarcity and improves the utilization rate of resources in the resource pool.

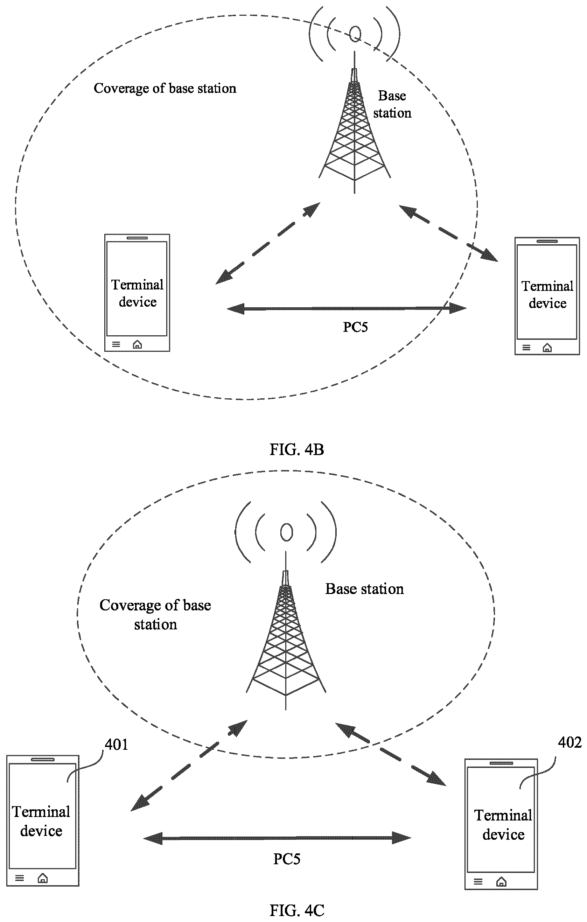

Communication scenarios of Sidelink can be divided into that all terminal devices are within a coverage of a base station (In-Coverage), part of the terminal devices are within the coverage of the base station (Partial-Coverage), and all terminal devices are out of the coverage of the base station (Out-of-Coverage), as shown in FIG. 4A, FIG. 4B and FIG. 4C.

The application scenario to which the embodiments of the present disclosure are applicable may be any one of the above-mentioned communication scenarios, and FIG. 4C is taken as an example in the following for illustration.

Referring to FIG. 4C, a terminal device 401 and a terminal device 402 are included. The terminal device 401 and the terminal device 402 communicate through a direct communication interface (such as PC5). The terminal device 401 determines a PSCCH frequency-domain resource range based on a resource configuration parameter, and performs PSCCH detection within the PSCCH frequency-domain resource range to perform SCI blind detection, so that the terminal device 401 may determine, based on a blind detection result, an available transmission resource of a PRS indicated in SCI information sent by the terminal device 402.

It may be understood that, the quantity of the terminal device 401 and the quantity of the terminal device 402 may both be multiple, which are not shown in the figure. The terminal device 401 and the terminal device 402 may be a mobile phone (Mobile Phone), a tablet computer (Pad), a computer with wireless transceiving functions, and a virtual reality (Virtual Reality, VR) terminal device, an augmented reality (Augmented Reality, AR) terminal device, a wireless terminal in industrial control (Industrial Control), a vehicle terminal device, a wireless terminal in self-driving (Self Driving), a road side unit (Road Side Unit, RSU), a wireless terminal device in remote medical (Remote Medical), a wireless terminal device in smart grid (Smart Grid), a wireless terminal device in transportation safety (Transportation Safety), a wireless terminal device in smart city (Smart City), a wireless terminal device in smart home (Smart Home), a wearable terminal device, etc. The terminal device involved in the embodiments of the present disclosure may also be referred to as a terminal, user equipment (User Equipment, UE), an access terminal device, a vehicle terminal, an industrial control terminal, a UE unit, a UE station, a mobile station, a mobile, a remote station, remote user equipment, a mobile device, a wireless communication device, a UE proxy, or a UE device, etc.

The base station in FIGs. 4A-4C is a device with wireless transceiving functions, which includes, but is not limited to, an evolutional base station (Evolutional Node B, eNB or eNodeB) in LTE, a base station (gNodeB or gNB) or a transmission and receiving point (Transmission and Receiving Point, TRP) in NR, a base station in a subsequent evolution system, an access node in a wireless fidelity (Wireless Fidelity, WiFi) system, a wireless relay node, a wireless backhaul node, etc. The base station may be a macro base station, a micro base station, a pico base station, a small station, a relay station, etc.

The technical solutions of the present disclosure and how the technical solutions of the present disclosure solve the above-mentioned technical problems are described in detail below with reference to the specific embodiments. The following several specific embodiments may exist independently or be combined with each other, and for the same or similar concepts or processes, they may not be repeated in some embodiments. The embodiments of the present disclosure will be described below in conjunction with the accompanying drawings.

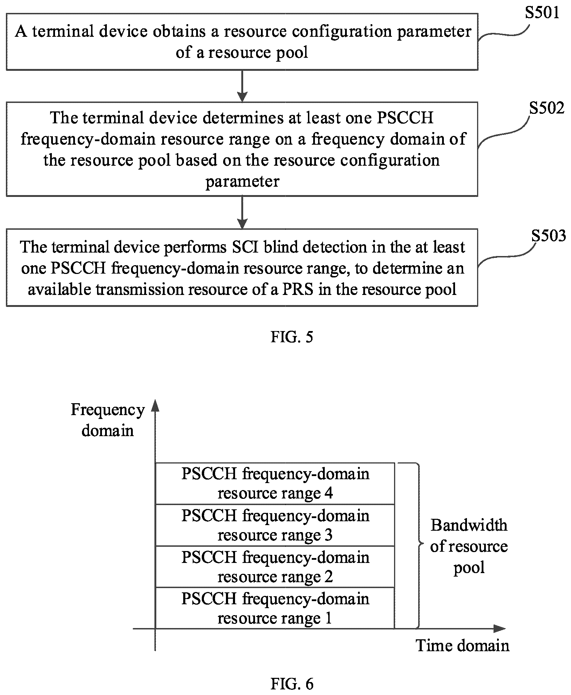

FIG. 5 is a schematic flowchart of a resource allocation method according to Embodiment 1 of the present disclosure. The method may be executed by a terminal device. Referring to FIG. 5, the method includes the following steps.

S501, a terminal device obtains a resource configuration parameter of a resource pool.

The terminal device may obtain the resource configuration parameter of the resource pool, and the resource pool may be configured to transmit a PRS. It can be understood that the resource pool may also be used for the terminal device to transmit information such as a PSCCH and a PSSCH, which is not limited in the present disclosure.

It should be noted that the resource configuration parameter may be determined by the terminal device based on a predefined rule thereof, and may also be preconfigured by high-layer signaling of the terminal device, through which the terminal device obtains the resource configuration parameter. Or, the resource configuration parameter may also be configured by a network device (such as a base station), and sent to the terminal device.

S502, the terminal device determines at least one PSCCH frequency-domain resource range on a frequency domain of the resource pool based on the resource configuration parameter.

After obtaining the resource configuration parameter, the terminal device may determine the at least one PSCCH frequency-domain resource range on the frequency domain of the resource pool based on the resource configuration parameter.

Further, the manner of determining the at least one PSCCH frequency-domain resource range is different due to different resource configuration parameters. For example, when the resource configuration parameter includes a configuration parameter of an SL-PRS resource in each slot, it means that each slot includes a plurality of SL-PRS resources. Then, the terminal device may determine at least one PSCCH frequency-domain resource range in each slot, so that the terminal device determines SL-PRS resources associated with each PSCCH frequency-domain resource range based on a mapping manner between SL-PRS resources and PSCCH frequency-domain resource ranges.

S503, the terminal device performs SCI blind detection in the at least one PSCCH frequency-domain resource range, to determine an available transmission resource of a PRS in the resource pool.

The terminal device may perform the SCI blind detection in the at least one PSCCH frequency-domain resource range, and determines the available transmission resource of the PRS in the resource pool based on a blind detection result.

For example, when the resource configuration parameter includes the configuration parameter of the SL-PRS resource in each slot, each PSCCH frequency-domain resource range used by the terminal device for the SCI blind detection is associated with at least one SL-PRS resource. Then, the terminal device may determine whether the SL-PRS resource associated with each frequency-domain resource range in the at least one PSCCH frequency-domain resource range is available based on the blind detection result, so as to realize that in one slot, at least one SL-PRS resource can be provided to a plurality of terminal devices to perform PRS transmission.

For example, the above-mentioned blind detection result may be a value of an RSRP, and when the value of the RSRP is less than or equal to a preset power threshold, it is determined that the SL-PRS resource associated with the corresponding PSCCH frequency-domain resource range is available. It can be understood that the available SL-PRS resource may be a reserved resource of other terminal devices within the resource selection window.

In this embodiment, the terminal device obtains the resource configuration parameter of the resource pool, determines the at least one PSCCH frequency-domain resource range on the frequency domain of the resource pool based on the resource configuration parameter, and performs the SCI blind detection in the at least one PSCCH frequency-domain resource range, to determine the available transmission resource of the PRS in the resource pool based on the SCI blind detection result. It is no longer necessary to allocate one slot to one terminal device for PRS transmission, which helps alleviate the problem of resource scarcity and improves the utilization rate of resources in the resource pool.

The resource configuration parameters are different, and the determination manners for the PSCCH frequency-domain resource range are also different accordingly, which can be exemplarily divided into four determination manners. Taking the four determination manners as examples, the following will illustrate in detail how the terminal device determines the PSCCH frequency-domain resource range based on the four determination manners through Embodiments 2 to 5.

Embodiment 2 of the present disclosure provides a determination method for a PSCCH frequency-domain resource range, which may be executed by a terminal device.

The resource configuration parameter includes one or more of the following parameters: a configuration parameter of at least one SL-PRS resource in each slot, a quantity N of SL-PRS resources associated with each PSCCH frequency-domain resource range, where N is a positive integer.

The configuration parameter of the SL-PRS resource may include: a starting symbol position of the SL-PRS, a quantity of symbols occupied by the SL-PRS, a resource element offset value of the SL-PRS, a resource pattern of the SL-PRS, and a quantity of frequency-domain sub-channels or resource blocks occupied by the SL-PRS.

The terminal device may divide frequency-domain resources of the resource pool based on the quantity N of the SL-PRS resources associated with each PSCCH frequency-domain resource range in the above-mentioned resource configuration parameter and a quantity of SL-PRS resources configured in each slot, so as to determine a resource size of the at least one PSCCH frequency-domain resource range. For example, when N is 2, the quantity of the SL-PRS resources configured in each slot is 8, and the bandwidth of the resource pool is 24 sub-channels, as shown in FIG. 6, four PSCCH frequency-domain resource ranges may be determined based on the N and the quantity of the SL-PRS resources of 8. The resource size of each PSCCH frequency-domain resource range is 6 sub-channels, which have been sorted from low to high based on their frequency-domain positions in the figure.

Further, the terminal device may determine the PSCCH frequency-domain resource range associated with each SL-PRS resource on the frequency domain of the resource pool based on the resource size of each PSCCH frequency-domain resource range, the configuration parameter of the SL-PRS resource, and a mapping manner between SL-PRS resources and PSCCH frequency-domain resource ranges.

Optionally, the above-mentioned mapping manner is to map the SL-PRS resources to the PSCCH frequency-domain resource ranges in sequence based on index numbers of the SL-PRS resources and a frequency-domain position of the at least one PSCCH frequency-domain resource range. Specifically, the above-mentioned mapping manner may be to map the SL-PRS resources to the PSCCH frequency-domain resource ranges in sequence based on the index numbers of the SL-PRS resources from small to large and the frequency-domain position of the at least one PSCCH frequency-domain resource range from low to high.

Taking four PSCCH frequency-domain resource ranges as an example, the four PSCCH frequency-domain resource ranges are sorted from low to high based on their frequency-domain positions as: PSCCH frequency-domain resource range 1,..., and PSCCH frequency-domain resource range 4. The 8 SL-PRS resources configured in each slot are sorted from small to large based on their index numbers as: SL-PRS1, SL-PRS2,..., and SL-PRS8. Based on the mapping manner between the SL-PRS resources and the PSCCH frequency-domain resources, and based on the index numbers of the SL-PRS resources from small to large, every two SL-PRS resources are mapped to a PSCCH frequency-domain resource range in the ascending order of the frequency-domain positions of the PSCCH frequency-domain resource ranges. That is, the SL-PRS1 and the SL-PRS2 are mapped to the PSCCH frequency-domain resource range 1, the SL-PRS3 and the SL-PRS4 are mapped to the PSCCH frequency-domain resource range 2, the SL-PRS5 and the SL-PRS6 are mapped to the PSCCH frequency-domain resource range 3, and the SL-PRS7 and the SL-PRS8 are mapped to the PSCCH frequency-domain resource range 4. That is to say, every two SL-PRS resources are associated with the PSCCH frequency-domain resource range, so as to have an association relationship, so that the terminal device can determine whether the SL-PRS resources associated with the PSCCH frequency-domain resource ranges are available based on the blind detection result of the SCI blind detection within the PSCCH frequency-domain resource ranges.

Specifically, after the PSCCH frequency-domain resource range associated with each SL-PRS resource is determined on the frequency domain of the resource pool, the starting symbol position, the quantity of occupied symbols, the resource unit offset value, the resource pattern, and the quantity of occupied frequency-domain sub-channels or resource blocks for the SL-PRS resource may be determined based on the configuration parameter of the SL-PRS resource, so that the terminal device uses the SL-PRS resource to perform PRS transmission when it is determined that the SL-PRS resource is available.

In this embodiment, after dividing the frequency-domain resources of the resource pool based on the resource configuration parameter and determining the resource sizes and positions of the PSCCH frequency-domain resource ranges, the terminal device maps the SL-PRS resources in one slot to the PSCCH frequency-domain resource ranges based on the mapping manner between the SL-PRS resources and the PSCCH frequency-domain resource ranges, so that the terminal device can determine whether the SL-PRS resources associated with the PSCCH frequency-domain resource ranges are available based on the blind detection results of the SCI blind detection within the PSCCH frequency-domain resource ranges. It is no longer necessary to allocate one slot to one terminal device for PRS transmission, which helps alleviate the problem of resource scarcity and improves the utilization rate of resources in the resource pool.

Embodiment 3 of the present disclosure provides another determination method for a PSCCH frequency-domain resource range, which may be executed by a terminal device

The resource configuration parameter includes one or more of the following parameters: a configuration parameter of at least one SL-PRS resource in each slot, a quantity P of PSCCH frequency-domain resource ranges, a resource size of each PSCCH frequency-domain resource range, a starting position of the first PSCCH frequency-domain resource range, and a frequency-domain interval between two adjacent PSCCH frequency-domain resource ranges, where P is an integer greater than or equal to 1.

The configuration parameter of the SL-PRS resource may include: a starting symbol position of the SL-PRS, a quantity of symbols occupied by the SL-PRS, a resource element offset value of the SL-PRS, a resource pattern of the SL-PRS, and a quantity of frequency-domain sub-channels or resource blocks occupied by the SL-PRS.

The terminal device may determine a position of the at least one PSCCH frequency-domain resource range based on the resource size of each PSCCH frequency-domain resource range, the quantity P of the PSCCH frequency-domain resource ranges, the starting position of the first PSCCH frequency-domain resource range, and the frequency-domain interval between two adjacent PSCCH frequency-domain resource ranges in the above-mentioned resource configuration parameter.

As a possible implementation, the terminal device may also determine the quantity P of the PSCCH frequency-domain resource ranges based on the quantity of the SL-PRS resources configured in each slot, that is, the quantity of the SL-PRS resources configured in each slot may be equal to the quantity P of the PSCCH frequency-domain resource ranges.

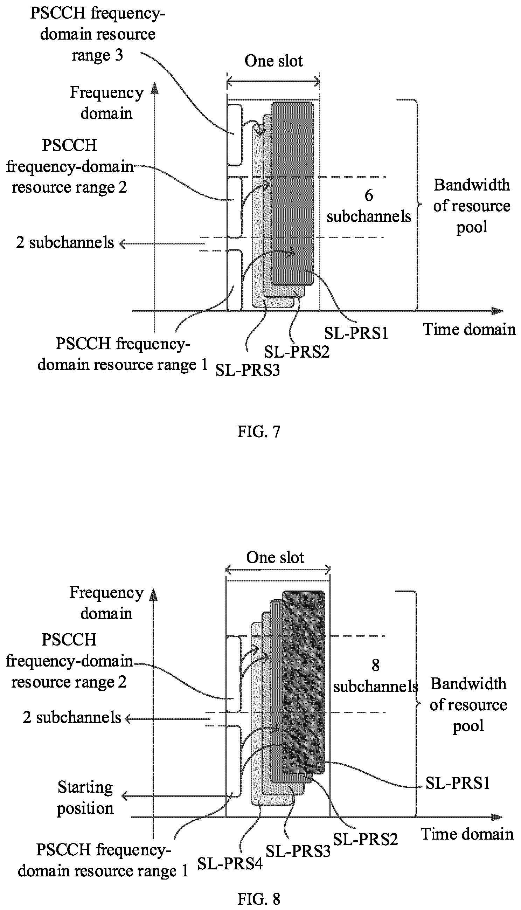

For example, the starting position of the first PSCCH frequency-domain resource range may be a serial number of a starting resource block or a starting sub-channel. For example, the serial number of the starting sub-channel of the first PSCCH frequency-domain resource range is 0. Since one sub-channel includes a plurality of resource blocks, the starting position of the first PSCCH frequency-domain resource range is not limited to a certain resource block in the sub-channel 0. That is to say, the entire sub-channel 0 may be taken as the starting position of the first PSCCH frequency-domain resource range. The value of the quantity P of the PSCCH frequency-domain resource ranges is 3, and the frequency-domain interval between two adjacent PSCCH frequency-domain resource ranges is 2 sub-channels, so the terminal device determines the positions of three PSCCH frequency-domain resource ranges as shown in FIG. 7, which have been sorted from low to high based on frequency-domain positions in the figure.

Further, the terminal device may determine a quantity of SL-PRS resources corresponding to one PSCCH frequency-domain resource range based on the quantity of the SL-PRS resources configured in each slot and the quantity P of the PSCCH frequency-domain resource ranges. For example, when the quantity of the SL-PRS resources configured in each slot is 3 and P is 3, then one SL-PRS resource corresponding to one PSCCH frequency domain resource range is determined.

Further, the terminal device may determine the PSCCH frequency-domain resource range associated with each SL-PRS resource on the frequency domain of the resource pool based on the position of the at least one PSCCH frequency-domain resource range, the configuration parameter of the SL-PRS resource, the mapping manner between the SL-PRS resources and the PSCCH frequency-domain resource ranges, and the quantity of the SL-PRS resources corresponding to one PSCCH frequency-domain resource range.

Taking FIG. 7 as an example, the three PSCCH frequency-domain resource ranges are sorted from low to high based on their frequency-domain positions as: PSCCH frequency-domain resource range 1, PSCCH frequency-domain resource range 2 and PSCCH frequency-domain resource range 3. The three SL-PRS resources configured in each slot are sorted from small to large based on their index numbers: SL-PRS1, SL-PRS2, and SL-PRS3. The terminal device may map the SL-PRS1 to the PSCCH frequency-domain resource range 1, the SL-PRS2 to the PSCCH frequency-domain resource range 2, and the SL-PRS3 to the PSCCH frequency-domain resource range 3 based on the mapping manner between the SL-PRS resources and the PSCCH frequency-domain resource ranges. That is to say, each of the SL-PRS resources is associated with each of the PSCCH frequency-domain resource ranges, so as to have an association relationship, so that the terminal device can determine whether the SL-PRS resources associated with the PSCCH frequency-domain resource ranges are available based on the blind detection result of the SCI blind detection within the PSCCH frequency-domain resource ranges.

In another example, the serial number of the starting sub-channel of the first PSCCH frequency-domain resource range is 2, the quantity P of the PSCCH frequency-domain resource ranges is 2, and the frequency-domain interval between two adjacent PSCCH frequency-domain resource ranges is 2 sub-channels, then the terminal device determines the positions of two PSCCH frequency-domain resource ranges as shown in FIG. 8. Further, the terminal device may determine two SL-PRS resources corresponding to one PSCCH frequency-domain resource range based on the quantity of the SL-PRS resources configured in each slot of 4 and the quantity of the PSCCH frequency-domain resource ranges of 2.

The two PSCCH frequency-domain resource ranges are sorted from low to high based on their frequency-domain positions as: PSCCH frequency-domain resource range 1 and PSCCH frequency-domain resource range 2. The four SL-PRS resources configured in each slot are sorted from small to large based on their frequency index numbers as: SL-PRS1, SL-PRS2, SL-PRS3, and SL-PRS4. As shown in FIG. 8, the terminal device maps the SL-PRS1 and the SL-PRS2 to the PSCCH frequency-domain resource range 1, and maps the SL-PRS3 and the SL-PRS4 to the PSCCH frequency-domain resource range 2, based on the mapping manner between the SL-PRS resources and the PSCCH frequency-domain resource ranges. That is to say, every two SL-PRS resources are associated with each of the PSCCH frequency-domain resource ranges, so as to have an association relationship.

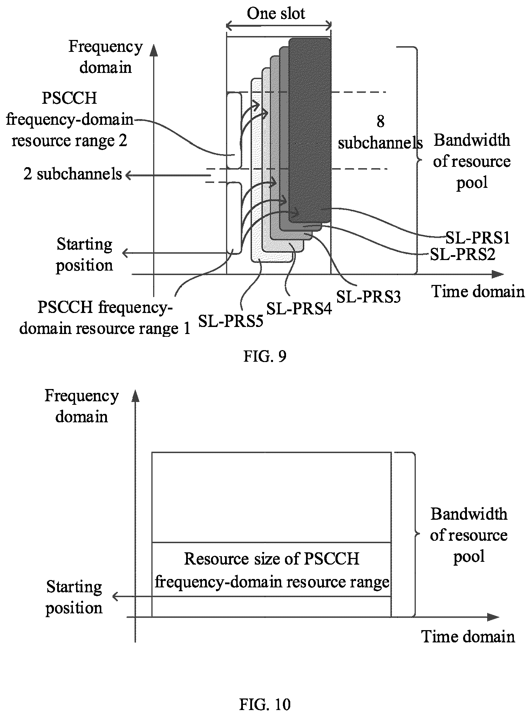

In still another example, the serial number of the starting sub-channel of the first PSCCH frequency-domain resource range is 2, the quantity P of the PSCCH frequency-domain resource ranges is 2, and the frequency-domain interval between two adjacent PSCCH frequency-domain resource ranges is 2 sub-channels, then the terminal device determines the positions of two PSCCH frequency-domain resource ranges as shown in FIG. 9. Further, based on the quantity of the SL-PRS resources configured in each slot of 5 and the quantity of the PSCCH frequency-domain resource ranges of 2, the terminal device may determine the quantity of the SL-PRS resources associated with one PSCCH frequency-domain resource range by calculating a ratio of the quantity M of the SL-PRS resources to the quantity N of the PSCCH frequency-domain resource ranges and rounding up the ratio to the nearest integer. That is, the quantity of the SL-PRS resources corresponding to one PSCCH frequency-domain resource range is equal to [M/N]. Then, in this example, the terminal device may determine three SL-PRS resources corresponding to one PSCCH frequency-domain resource range.

The two PSCCH frequency-domain resource ranges are sorted from low to high based on their frequency-domain positions as: PSCCH frequency-domain resource range 1 and PSCCH frequency-domain resource range 2. The five SL-PRS resources configured in each slot are sorted from small to large based on their index numbers: SL-PRS1, SL-PRS2,..., SL-PRS5. As shown in FIG. 9, the terminal device maps the S1-PRS1, the S1-PRS2 and the S1-PRS3 to the PSCCH frequency-domain resource range 1, and maps the S1-PRS4 and the S1-PRS5 to the PSCCH frequency-domain resource range 2, based on the mapping manner between the SL-PRS resources and the PSCCH frequency-domain resource ranges. That is to say, the first three SL-PRS resources are associated with the first PSCCH frequency-domain resource range, and the next two SL-PRS resources are associated with the second PSCCH frequency-domain resource range, so as to have an association relationship.

For the description of the mapping manner between the SL-PRS resources and the PSCCH frequency-domain resource ranges, reference may be made to Embodiment 2, which will not be repeated herein.

Specifically, after the PSCCH frequency-domain resource range associated with each SL-PRS resource is determined on the frequency domain of the resource pool, the starting symbol position, the quantity of occupied symbols, the resource unit offset value, the resource pattern, the quantity of occupied frequency-domain sub-channels or resource blocks for the SL-PRS resource may be determined based on the configuration parameter of the SL-PRS resource, so that the terminal device uses the SL-PRS resource to perform PRS transmission when it is determined that the SL-PRS resource is available.

In this embodiment, after dividing the frequency-domain resources of the resource pool based on the resource configuration parameter and determining the positions and resource sizes of the PSCCH frequency-domain resource ranges, the terminal device maps the SL-PRS resources in one slot to the PSCCH frequency-domain resource ranges based on the mapping manner between the SL-PRS resources and the PSCCH frequency-domain resource ranges, so that the terminal device can determine whether the SL-PRS resources associated with the PSCCH frequency-domain resource ranges are available based on the blind detection results of the SCI blind detection within the PSCCH frequency-domain resource ranges. It is no longer necessary to allocate one slot to one terminal device for PRS transmission, which helps alleviate the problem of resource scarcity and improves the utilization rate of resources in the resource pool.

It should be noted that the mapping manners between the SL-PRS resources and the PSCCH frequency-domain resource ranges in the above-mentioned embodiments are merely exemplary, and the mapping manner between the SL-PRS resources and the PSCCH frequency-domain resources may also be other mapping manners, such as mapping the SL-PRS resources and the PSCCH frequency-domain resource ranges in sequence based on the index numbers of the SL-PRS resources from large to small and the frequency-domain position of the at least one PSCCH frequency-domain resource range from low to high. For another example, the mapping manner between the SL-PRS resources and the PSCCH frequency-domain resource ranges may also be mapping the SL-PRS resources to any one or more PSCCH frequency-domain resource ranges, which is not limited in the present disclosure.

Embodiment 4 of the present disclosure provides still another determination method for a PSCCH frequency-domain resource range, which may be executed by a terminal device.

The resource configuration parameter includes one or more of the following parameters: a starting position of the PSCCH frequency-domain resource range and a resource size of the PSCCH frequency-domain resource range. For the description of the starting position of the PSCCH frequency resource range, reference may be made to Embodiment 3, which will not be repeated herein.

Further, the terminal device may determine at least one PSCCH frequency-domain resource range on the frequency domain of the resource pool based on the starting position of the PSCCH frequency-domain resource range and the resource size of the PSCCH frequency-domain resource range, as shown in FIG. 10, which is a schematic diagram of one determined PSCCH frequency-domain resource range.

As a possible implementation, the terminal device may also determine a plurality of PSCCH frequency-domain resource ranges based on the resource size of the resource pool and the resource size of the PSCCH frequency-domain resource range. For example, when the resource size of the resource pool is 64 sub-channels and the resource size of the PSCCH frequency-domain resource range is 8 sub-channels, the terminal device may determine 8 PSCCH frequency-domain resource ranges, so that the terminal device can perform SCI blind detection within at least one PSCCH frequency-domain resource range, and determine an available transmission resource of a PRS based on an SCI blind detection result.

In this embodiment, the terminal device determines the at least one PDSCH frequency-domain resource range based on the resource configuration parameter, so that the terminal device only needs to perform the SCI blind detection within the PDSCH frequency-domain resource range to determine the available transmission resource of the PRS based on the blind detection result, and the SCI blind detection does not need to be performed in the entire PRS resource pool, thereby reducing the complexity of the SCI blind detection performed by the terminal device.

Embodiment 5 of the present disclosure provides yet another determination method for a PSCCH frequency-domain resource range, which may be executed by a terminal device.

The resource configuration parameter includes one or more of the following parameters: a starting position of the resource pool, a resource size of the PSCCH frequency-domain resource range, where the starting position of the resource pool may be a starting resource block or a starting sub-channel.

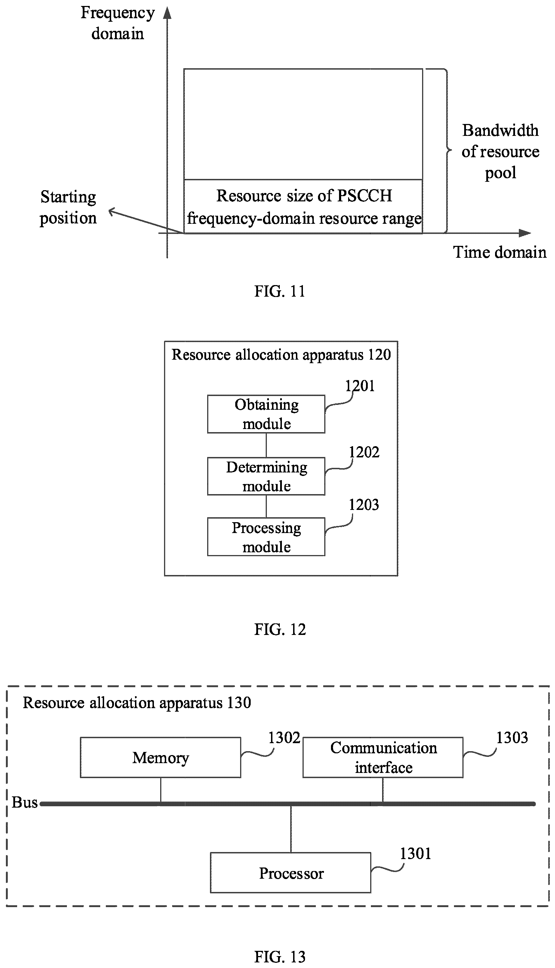

Further, the terminal device may take the starting position of the resource pool as the starting position of the PSCCH frequency-domain resource range, and then determine at least one PSCCH frequency-domain resource range on the frequency domain of the resource pool based on the starting position of the PSCCH frequency-domain resource range and the resource size of the PSCCH frequency-domain resource range, as shown in FIG. 11, which is a schematic diagram of one determined PSCCH frequency-domain resource range.

As a possible implementation, the terminal device may also determine a plurality of PSCCH frequency-domain resource ranges based on the resource size of the resource pool and the resource size of the PSCCH frequency-domain resource range. For example, when the resource size of the resource pool is 64 sub-channels and the resource size of the frequency-domain resource range of the PSCCH is 8 sub-channels, the terminal device may determine 8 PSCCH frequency-domain resource ranges, so that the terminal device can perform SCI blind detection within at least one PSCCH frequency-domain resource range, and determine an available transmission resource of a PRS based on an SCI blind detection result.

In this embodiment, the terminal device determines the at least one PDSCH frequency-domain resource range based on the resource configuration parameter, so that the terminal device only needs to perform the SCI blind detection within the PDSCH frequency-domain resource range to determine the available transmission resource of the PRS based on the blind detection result, and the SCI blind detection does not need to be performed in the entire PRS resource pool, thereby reducing the complexity of the SCI blind detection performed by the terminal device.

FIG. 12 is a schematic structural diagram of a resource allocation apparatus according to Embodiment 6 of the present disclosure. The apparatus 120 may be a chip or a chip module. Referring to FIG. 12, the apparatus 120 includes: an obtaining module 1201, a determining module 1202, and a processing module 1203.

The obtaining module 1201 is configured to obtain a resource configuration parameter of a resource pool.

The determining module 1202 is configured to determine at least one physical sidelink control channel PSCCH frequency-domain resource range on a frequency domain of the resource pool based on the resource configuration parameter.

The processing module 1203 is configured to perform sidelink control information SCI blind detection within the at least one PSCCH frequency-domain resource range, to determine an available transmission resource of a positioning reference signal PRS.

In a possible implementation, the resource configuration parameter includes one or more of the following parameters:
a configuration parameter of at least one sidelink positioning reference signal SL-PRS resource in each slot;
a quantity N of SL-PRS resources associated with each PSCCH frequency-domain resource range, where N is a positive integer.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining module 1202 is specifically configured to:
divide frequency-domain resources of the resource pool based on the N and a quantity of SL-PRS resources configured in each slot, to determine a resource size of the at least one PSCCH frequency-domain resource range.

In a possible implementation, the determining module 1202 is further configured to:
determine a PSCCH frequency-domain resource range associated with each SL-PRS resource on the frequency domain of the resource pool based on the resource size, the configuration parameter of the SL-PRS resource and a mapping manner between SL-PRS resources and PSCCH frequency-domain resource ranges.

In a possible implementation, the resource configuration parameter includes one or more of the following:
a configuration parameter of at least one SL-PRS resource in each slot;
a quantity P of PSCCH frequency-domain resource ranges, where P is an integer greater than or equal to 1;
a resource size of each PSCCH frequency-domain resource range;
a starting position of the first PSCCH frequency-domain resource range;
a frequency-domain interval between two adjacent PSCCH frequency-domain resource ranges.

In a possible implementation, the configuration parameter of the SL-PRS resource includes:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

In a possible implementation, the determining module 1202 is further configured to:
determine a position of the at least one PSCCH frequency-domain resource range based on the resource size of each PSCCH frequency-domain resource range, the P, the starting position of the first PSCCH frequency-domain resource range and the frequency-domain interval between two adjacent PSCCH frequency-domain resource ranges.

In a possible implementation, the determining module 1020 is further configured to:
determine a quantity of SL-PRS resources corresponding to one PSCCH frequency-domain resource range based on a quantity of SL-PRS resources configured in each slot and the P.

In a possible implementation, the determining module 1202 is further configured to:
determine a PSCCH frequency-domain resource range associated with each SL-PRS resource on the frequency domain of the resource pool based on the position of the at least one PSCCH frequency-domain resource range, the configuration parameter of the SL-PRS resource, a mapping manner between SL-PRS resources and PSCCH frequency-domain resource ranges, and the quantity of the SL-PRS resources associated with one PSCCH frequency-domain resource range.

In a possible implementation, the mapping manner is to map the SL-PRS resources to the PSCCH frequency-domain resource ranges in sequence based on index numbers of the SL-PRS resources and a frequency-domain position of the at least one PSCCH frequency-domain resource range.

In a possible implementation, the resource configuration parameter includes one or more of the following parameters:
a starting position of the PSCCH frequency-domain resource range and a resource size of the PSCCH frequency-domain resource range.

In a possible implementation, the determining module 1202 is further configured to:
determine the at least one PSCCH frequency-domain resource range on the frequency domain of the resource pool based on the starting position and the resource size.

In a possible implementation, the resource configuration parameter includes one or more of the following parameters:
a starting position of the resource pool and a resource size of the PSCCH frequency-domain resource range.

In a possible implementation, the determining module 1202 is further configured to:
take the starting position of the resource pool as a starting position of the PSCCH frequency-domain resource range;
determine at least one PSCCH frequency-domain resource range on the frequency domain of the resource pool based on the starting position and the resource size.

In a possible implementation, the starting position is a starting sub-channel or a starting resource block (RB) of the resource pool.

In a possible implementation, the processing module 1203 is specifically configured to:
perform the SCI blind detection within the at least one PSCCH frequency-domain resource range, to obtain an SCI blind detection result;
determine whether a PRS resource associated with each PSCCH frequency-domain resource range in the at least one PSCCH frequency-domain resource range is available based on the SCI blind detection result, where the available transmission resource of the PRS is at least one of a plurality of SL-PRS resources in a slot where the transmission resource is located.

In a possible implementation the processing module 1203 is further configured to:
perform the SCI blind detection within the at least one PSCCH frequency-domain resource range, to obtain an SCI blind detection result;
determine the available transmission resource of the PRS based on the SCI blind detection result.

In a possible implementation, the resource pool is configured to transmit the PRS.

The apparatus in this embodiment can be used to execute the technical solutions of the resource allocation method in the above-mentioned method embodiments, and specific implementations and technical effects are similar, and will not be repeated herein.

FIG. 13 is a schematic structural diagram of a resource allocation apparatus according to Embodiment 7 of the present disclosure. As shown in FIG. 13, the resource allocation apparatus 130 may include: at least one processor 1301 and a memory 1302.

The memory 1302 is configured to store a program. Specifically, the program may include program code, which includes computer operation instructions.

The memory 1302 may include a high-speed random access memory (Random Access Memory, RAM), and may also include a non-volatile memory (Non-Volatile Memory), such as at least one magnetic disk memory.

The processor 1301 is configured to execute computer-execution instructions stored in the memory 1302, so as to implement the method described in the above-mentioned method embodiments. The processor 1301 may be a central processing unit (Central Processing Unit, CPU), an application specific integrated circuit (Application Specific Integrated Circuit, ASIC), or one or more integrated circuits configured to implement the embodiments of the present disclosure.

Optionally, the resource allocation apparatus 130 may further include a communication interface 1303. In a specific implementation, if the communication interface 1303, the memory 1302, and the processor 1301 are implemented independently, the communication interface 1303, the memory 1302, and the processor 1301 may be connected to each other through a bus and complete communication with each other. The bus 704 may be an industry standard architecture (Industry Standard Architecture, ISA) bus, a peripheral component interconnect (Peripheral Component, PCI) bus, an extended industry standard architecture (Extended Industry Standard Architecture, EISA) bus, etc. The bus 704 may be classified into an address bus, a data bus, a control bus, etc., but this does not mean that there is only one bus or one type of buses.

Optionally, in a specific implementation, if the communication interface 1303, the memory 1302, and the processor 1301 are integrated into a chip for implementation, the communication interface 1303, the memory 1302, and the processor 1301 may complete communication through internal interfaces.

The resource allocation apparatus 130 may be a chip, a module, an IDE, or a terminal device, etc.

The resource allocation apparatus in this embodiment can be used to execute the technical solutions of the resource allocation method in the above-mentioned method embodiments, and specific implementations and technical effects are similar, and will not be repeated herein.

Embodiment 8 of the present disclosure provides a computer-readable storage medium. The computer-readable storage medium may include various media capable of storing a computer program, such as a USB flash drive, a removable hard disk, a read-only memory (Read-Only Memory, ROM), a RAM, a magnetic disk, or an optical disk. Specifically, the computer-readable storage medium stores the computer program which, when being executed by a processor, is used to implement the technical solutions described in the above-mentioned method embodiments. Specific implementations and technical effects are similar, and will not be repeated herein.

Embodiment 9 of the present disclosure provides a computer program product, which includes a computer program. When the computer program is executed by a processor, the technical solutions described in the above-mentioned method embodiments are implemented. Specific implementations and technical effects are similar, and will not be repeated herein.

Embodiment 10 of the present disclosure provides a chip on which a computer program is stored. When the computer program is executed by the chip, the method as shown in the method embodiments is implemented. The chip may also be a chip module.

Those skilled in the art will easily come up with other embodiments of the present disclosure after considering the specification and practicing the disclosure disclosed herein. The present disclosure is intended to cover any variations, uses, or adaptive changes of the present disclosure, which follow the general principles of the present disclosure and include common general knowledge or conventional technical means in the art that is not disclosed in the present disclosure. The specification and embodiments are only considered exemplary, and the true scope and spirit of the present disclosure are indicated by the following claims.

It should be understood that the present disclosure is not limited to the precise structure described above and shown in the drawings, and various modifications and changes may be made without departing from the scope of the present disclosure. The scope of the present disclosure is limited only by the appended claims.

## Claims

1. A resource allocation method, comprising:
obtaining a resource configuration parameter of a resource pool;
determining at least one physical sidelink control channel PSCCH frequency-domain resource range on a frequency domain of the resource pool based on the resource configuration parameter;
performing sidelink control information SCI blind detection within the at least one PSCCH frequency-domain resource range, to determine an available transmission resource of a positioning reference signal PRS in the resource pool.

2. The method according to claim 1, wherein the resource configuration parameter comprises one or more of the following parameters:
a configuration parameter of at least one sidelink positioning reference signal SL-PRS resource in each slot;
a quantity N of SL-PRS resources associated with each PSCCH frequency-domain resource range, wherein N is a positive integer.

3. The method according to claim 2, wherein the configuration parameter of the SL-PRS resource comprises:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

4. The method according to claim 3, wherein the determining the at least one physical sidelink control channel PSCCH frequency-domain resource range on the frequency domain of the resource pool based on the resource configuration parameter of the resource pool comprises:
dividing frequency-domain resources of the resource pool based on the N and a quantity of SL-PRS resources configured in each slot, to determine a resource size of the at least one PSCCH frequency-domain resource range.

5. The method according to claim 4, wherein the method further comprises:
determining a PSCCH frequency-domain resource range associated with each SL-PRS resource on the frequency domain of the resource pool based on the resource size, the configuration parameter of the SL-PRS resource and a mapping manner between SL-PRS resources and PSCCH frequency-domain resource ranges.

6. The method according to claim 1, wherein the resource configuration parametercomprises one or more of the following:
a configuration parameter of at least one SL-PRS resource in each slot;
a quantity P of PSCCH frequency-domain resource ranges, wherein P is an integer greater than or equal to 1;
a resource size of each PSCCH frequency-domain resource range;
a starting position of the first PSCCH frequency-domain resource range;
a frequency-domain interval between two adjacent PSCCH frequency-domain resource ranges.

7. The method according to claim 6, wherein the configuration parameter of the SL-PRS resource comprises:
a starting symbol position of the SL-PRS;
a quantity of symbols occupied by the SL-PRS;
a resource element offset value of the SL-PRS;
a resource pattern of the SL-PRS;
a quantity of frequency-domain sub-channels or resource blocks occupied by the SL-PRS.

8. The method according to claim 7, wherein the determining the at least one physical sidelink control channel PSCCH frequency-domain resource range on the frequency domain of the resource pool based on the resource configuration parameter of the resource pool comprises:
determining a position of the at least one PSCCH frequency-domain resource range based on the resource size of each PSCCH frequency-domain resource range, the P, the starting position of the first PSCCH frequency-domain resource range and the frequency-domain interval between two adjacent PSCCH frequency-domain resource ranges.

9. The method according to claim 8, wherein the method further comprises:
determining a quantity of SL-PRS resources corresponding to one PSCCH frequency-domain resource range based on a quantity of SL-PRS resources configured in each slot and the P.

10. The method according to claim 9, wherein the method further comprises:
determining a PSCCH frequency-domain resource range associated with each SL-PRS resource on the frequency domain of the resource pool based on the position of the at least one PSCCH frequency-domain resource range, the configuration parameter of the SL-PRS resource, a mapping manner between SL-PRS resources and PSCCH frequency-domain resource ranges, and the quantity of the SL-PRS resources associated with one PSCCH frequency-domain resource range.

11. The method according to claim 5 or 10, wherein the mapping manner is to map the SL-PRS resources to the PSCCH frequency-domain resource ranges in sequence based on index numbers of the SL-PRS resources and a frequency-domain position of the at least one PSCCH frequency-domain resource range.

12. The method according to claim 1, wherein the resource configuration parameter comprises one or more of the following parameters:
a starting position of the PSCCH frequency-domain resource range and a resource size of the PSCCH frequency-domain resource range.

13. The method according to claim 12, wherein the determining the at least one physical sidelink control channel PSCCH frequency-domain resource range on the frequency domain of the resource pool based on the resource configuration parameter of the resource pool comprises:
determining the at least one PSCCH frequency-domain resource range on the frequency domain of the resource pool based on the starting position and the resource size.

14. The method according to claim 1, wherein the resource configuration parameter comprises one or more of the following parameters:
a starting position of the resource pool and a resource size of the PSCCH frequency-domain resource range.

15. The method according to claim 14, wherein the determining the at least one physical sidelink control channel PSCCH frequency-domain resource range on the frequency domain of the resource pool based on the resource configuration parameter of the resource pool comprises:
taking the starting position of the resource pool as a starting position of the PSCCH frequency-domain resource range;
determining at least one PSCCH frequency-domain resource range on the frequency domain of the resource pool based on the starting position and the resource size.

16. The method according to any one of claims 6-8 or 12-15, wherein the starting position is a starting sub-channel or a starting resource block RB of the resource pool.

17. The method according to any one of claims 2-10, wherein the performing the sidelink control information SCI blind detection within the at least one PSCCH frequency-domain resource range, to determine the available transmission resource of the positioning reference signal PRS in the resource pool, comprises:
performing the SCI blind detection within the at least one PSCCH frequency-domain resource range, to obtain an SCI blind detection result;
determining whether a PRS resource associated with each PSCCH frequency-domain resource range in the at least one PSCCH frequency-domain resource range is available based on the SCI blind detection result, wherein the available transmission resource of the PRS is at least one of a plurality of SL-PRS resources in a slot where the transmission resource is located.

18. The method according to any one of claims 12-15, wherein the performing the sidelink control information SCI blind detection within the at least one PSCCH frequency-domain resource range, to determine the available transmission resource of the positioning reference signal PRS in the resource pool, comprises:
performing the SCI blind detection within the at least one PSCCH frequency-domain resource range, to obtain an SCI blind detection result;
determining the available transmission resource of the PRS based on the SCI blind detection result.

19. The method according to claim 1, wherein the resource pool is configured to transmit the PRS.

20. A resource allocation apparatus, comprising:
an obtaining module, configured to obtain a resource configuration parameter of a resource pool;
a determining module, configured to determine at least one physical sidelink control channel PSCCH frequency-domain resource range on a frequency domain of the resource pool based on the resource configuration parameter;
a processing module, configured to perform sidelink control information SCI blind detection within the at least one PSCCH frequency-domain resource range, to determine an available transmission resource of a positioning reference signal PRS.

21. A resource allocation apparatus, comprising: a processor, and a memory communicatively connected with the processor; wherein
the memory stores computer-execution instructions;
the processor executes the computer-execution instructions stored in the memory, to implement the resource allocation method according to any one of claims 1-19.

22. A computer-readable storage medium, wherein the computer-readable storage medium stores computer-execution instructions which, when executed by a processor, are used to implement the resource allocation method according to any one of claims 1-19.
